# EUROPEAN PATENT APPLICATION

(11) **EP 2 111 043 A2**
(43) Date of publication of application: **21.10.2009**
(21) Application number: 09380078.7
(22) Date of filing: 16.04.2009
(51) Int. Cl.: H04N 7/24, H04H 60/27, H04H 60/13

(54) **Method of transmitting audiovisual contents in 'push' environments**

(30) Priority: 18.04.2008 ES 200801120
(71) Applicant: Adecq Digital, S.L., 08037 Barcelona (ES)
(72) Inventor: Flores D' Arcais, Giuseppe, 08037 Barcelona (ES); Vanyi-Robin, André L., 08037 Barcelona (ES); Alonso Riaño, Carlos, 08037 Barcelona (ES); Aguilar Fargas, Joan, 08037 Barcelona (ES)
(74) Representative: Durán Moya, Luis-Alfonso

(57) **Abstract**

Method for transmitting audiovisual contents in push environments, in which a transmitter transmits to a set of receivers a transmission signal which comprises at least a channel of audiovisual contents and a data channel associated therewith, **characterised in that** the transmitter transmits via the data channel at least one audiovisual content together with a recording instruction for a transmission receiver of the audiovisual content introduced in the data channel.

## Description

The present invention relates to transmissions in 'push' environments, in particular in digital terrestrial television (DTT) transmissions, although the invention is not necessarily limited to this particular field.

More particularly, the present invention relates to a method for sending audio and video contents by digital terrestrial television.

In DTT the terrestrial television signal is digitalised and compressed. The European standard which defines the details of the digitalisation and compression procedures of DTT transmissions is DVB-T (Digital Video Broadcast - Terrestrial).

In DVB-T transmissions, a frequency of the radioelectrical spectrum reserved for the television signal (typically 8MhZ) may contain 4 or 5 DTT channels (in MPEG2), compared with a single channel in analogue transmission. The DTT channels transmitted on a frequency are managed as a block (a "multiple channel") through a channel aggregator, called a multiplexer (MUX), and subsequently transmitted as a single transmission signal in accordance with the DVB-T standard.

In the case of Spain, each multiplexer has a bandwidth of approximately 20 Mb per second (Mbps) and includes four television channels. Each DTT channel is also associated with a data channel which, by Royal Decree (Royal Decree 944/2005), may use a maximum of 20% of the bandwidth of the channel. Said data channel is intended for sending data related to programming (known as metadata), for interactive television applications and for sending other types of data.

During the period of simultaneous transmissions in analogue and digital technology (known as the simulcast period), the DTT Technical Plan envisages five national multiplexers, one regional multiplexer and one local multiplex, for a total of 28 DTT channels.

To be able to view a DVB-T signal the signal must be decoded by an external decoder (DTT receiver or set top box) or a decoder integrated in the television set. There are different types of decoder which, generally, may be in one of three categories:
1. Basic receivers or "zappers":
   DTT receivers with minimum functionalities, principally DVB-T signal decoding and channel changing.
2. (Pseudo) interactive receivers:
   receivers that include the interactivity platform according to the DVB-MHP standard. These receivers allow different types of interactivity, depending on the MHP version and the existence of a return channel.
3. Receivers with a recorder and a hard disk, also known as PVR (Personal Video Recorder): this type of receiver allows the user to record programming.

The sale of receivers is a useful indicator of the state of DTT penetration, as each television set will have to have an (internal or external) decoder before transmissions in analogue technology cease (the so-called "analogue shutdown"). Under the Spanish legislative framework, the transition to DTT will be implemented in the next three years up to the analogue shutdown date, established by law as 3 April 2010. This calendar varies in other European countries, but the majority of countries that have already begun to transmit in DVB-T are planning to cease analogue transmissions between 2010 and 2012 and the other countries in 2015.

A disadvantage of DTT with regard to television transmissions by cable, is that it is performed in a 'push' environment, in other words, firstly, the transmission cannot be customised for each particular receiver and, secondly, there is no possibility of receiving responses from the user (feedback) through the transmission channel. Therefore all operations in a 'push' environment must occur synchronously. To date, this has prevented or made it difficult to customise the service, together with other drawbacks. For example, content must be recorded by the receiver online and synchronously, in other words it must be performed during the broadcast.

These difficulties also produce an economic problem, in that the synchronous character means that the only content that can be used at a given moment is the content that is being sent at that moment.

An object of the present invention is to disclose a method for the asynchronous transmission of audiovisual content in 'push' environments.

A further object of the present invention is to disclose a method which allows better use to be made of the bandwidth in digital terrestrial television transmissions, and which also solves the above-mentioned problems.

Accordingly, the present invention consists of a method for broadcasting audiovisual contents in push environments, in which a transmitter transmits a transmission signal to a set of receivers which comprises at least one channel of audiovisual content and one data channel associated therewith, **characterised in that** the transmitter transmits at least one audiovisual content via the data channel together with a recording instruction for a transmission receiver of the audiovisual content introduced in the data channel.

The method according to the present invention allows audiovisual contents to be sent in parallel, the objective of which is not synchronous viewing. The recording order or orders allow not only differentiation of the audiovisual contents from the metadata of the data channel, but also customisation of the service, and therefore allow the transmitter to customise the recording orders.

Preferably, the transmitter uses a portion of the data channel bandwidth for sending a frame identifying the data associated with the audiovisual contents of the audiovisual transmission channel (metadata) and data corresponding to the audiovisual contents transmitted by the data channel.

Preferably, the audiovisual content or contents transmitted by the data channel is fragmented in portions and the portions are listed for transmission for subsequent recording and defragmentation thereof by the receiver. There is therefore no need for lengthy interruptions in the flow of metadata via the data channel, and it is also possible to transmit various audiovisual contents simultaneously via the data channel.

Preferably also, the transmitter uses a portion of the bandwidth corresponding to the data channel for sending a frame identifying the fragments.

The present invention also discloses a suitable system for carrying out the method according to the present invention.

In particular, the present invention also comprises a system for broadcasting audiovisual contents in push environments, preferably digital terrestrial television, which comprises at least a broadcaster which provides audiovisual contents for transmission and metadata to a network operator which transmits them by means of a transmission signal comprising at least an audiovisual content channel and a data channel which contains the metadata, and at least a receiver which receives the transmission signal, comprising at least a tuner and a hard disk for recording audiovisual contents, **characterised in that** the network operator the transmitter transmits via the data channel at least an audiovisual content together with a recording instruction for the receiver introduced in the data channel, and in that the receiver comprises at least a second tuner and an analyser of the signal received for interpreting the instruction or instructions contained in the data channel.

Preferably, the network operator uses a portion of the data channel bandwidth for sending a frame for identifying data associated with audiovisual contents of the audiovisual transmission channel (metadata) and data corresponding to audiovisual contents transmitted by the data channel.

More preferably, the network operator uses a portion of the data channel bandwidth for sending a frame for identifying the data associated with the audiovisual contents of the audiovisual transmission channel (metadata) and data corresponding to audiovisual contents transmitted by the data channel. Even more preferably, the network operator uses a portion of the bandwidth corresponding to the data channel for sending a frame for identifying the fragments.

For a better understanding of the invention, the accompanying drawings show embodiments of the present invention as explanatory but not limiting examples.

Fig. 1 is a diagram showing a multichannel structure of a multifrequency digital terrestrial television transmission.

Fig. 2 is a time diagram of the contents of a multiple channel.

Fig. 3 shows a diagram in which a process for generating a digital terrestrial television transmission is illustrated in which each channel comprises at least an audiovisual channel and a data channel.

Fig. 4 is a diagram of a possible embodiment of a system according to the present invention.

Fig. 5 is a diagram of a possible embodiment of a receiver according to the present invention.

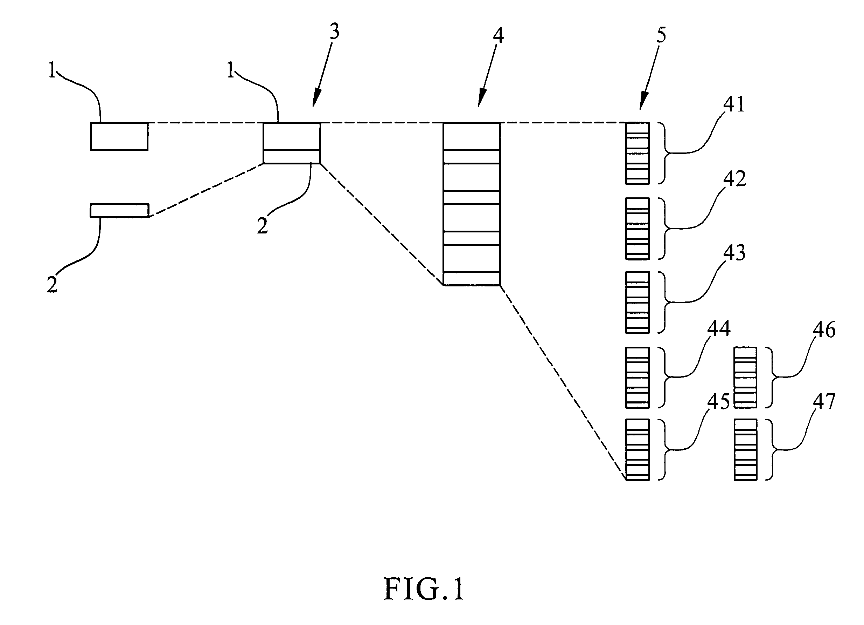

Fig. 1 shows an example of digital terrestrial television transmission (DTT) in which the transmission 5 consists of seven multiple or multiplex channels 41, 42, 43, 44, 45, 46, 47. Each channel 3 dedicates a portion of the bandwidth (e.g. 80%) to audiovisual contents (digitalised and compressed) and the remaining width (e.g.) to a data channel in which metadata are included (e.g. information on number of the audiovisual content transmitted, next programme, etc). A set of channels 3 like the one described is multiplexed 4 in a multiple channel which is transmitted as a single transmission signal, following a standard procedure, such as DVB-T, such that the radioelectrical space 5 is occupied by a particular set of multiple channels 41, 42, 43, 44, 45, 46, 47.

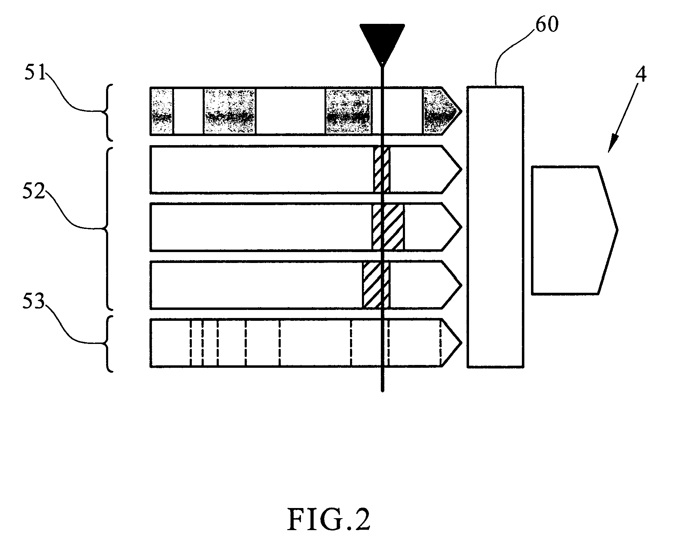

Fig. 2 is a diagrammatic view, in a multiple channel, of three channels 52 which are not coded by the method according to the present invention and a channel according to the present invention 51 of which the data channel 53 has been modified. According to the DTT standard, the audiovisual contents may be compressed using MPEG2 procedures. All the audiovisual content / data channels are aggregated by a multiplexer 60 and sent in a multiplexed signal 4 or multiple channel. At a given moment, the corresponding time packets indicated by the vertical line are transmitted.

According to a preferred embodiment of the present invention, the data channel 53 comprises data packets which correspond to metadata (data referring to the audiovisual content of an associated audiovisual channel), to audiovisual contents sent via the data channel, and recording orders for a DTT receiver. Typically the audiovisual contents are sent in the form of fragments in a format compatible with the data channel. Preferably, a signalling frame may be included in the channel, and the fragments of audiovisual contents are listed. The listing of the fragments allows the simultaneous sending of different audiovisual contents via the data channel. It also eliminates complicated coding techniques such as watermarking, which affects the identity of the contents. This, in turn, allows the service to be personalised, and the receivers therefore record audiovisual content transmitted by the data channel only if they receive a specific order, without the need to encrypt the audiovisual content.

In a particular embodiment, all the fragments of audiovisual content sent by the data channel may be associated with a recording order, and in this case a default 'keep for' instruction may be indicated, after which the content is deleted from the hard disk of the receiver.

The audiovisual contents may be introduced in the data channel, for example, compressed by the TS (Transport Stream) process, which in turn is a format which is an MPEG representation.

According to the guidelines of the DVB standard, the data channel may also contain structures known as 'interactive applications'.

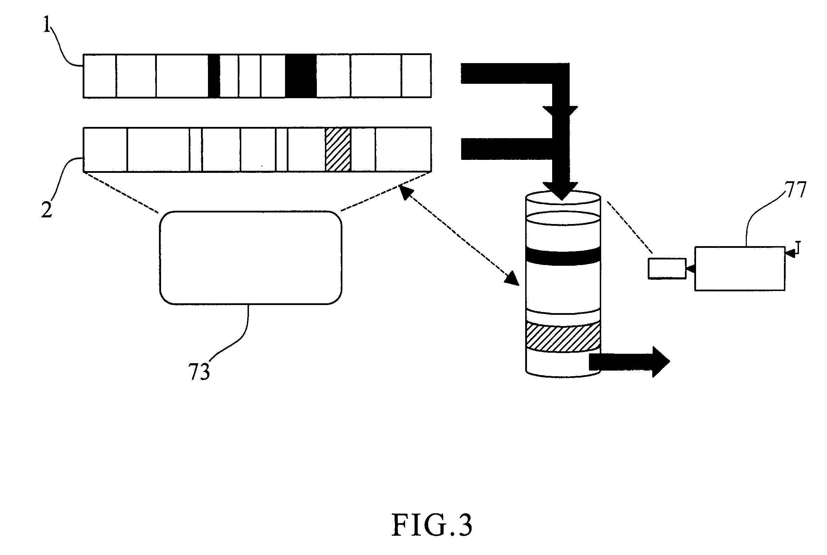

Fig. 3 illustrates diagrammatically how the data channel packets (with the packets of audiovisual information) and the data channels (with packets of metadata, instructions and audiovisual information according to the present invention) are aggregated in the same signal using an aggregation procedure, for example the DVB-T protocol (DVB-T AN for the audiovisual content and DVB-T DATA for the data channel) and sent to a receiver 77. The receiver 77 then records the audiovisual content sent by the data channel, according to the instructions received, for subsequent asynchronous viewing thereof.

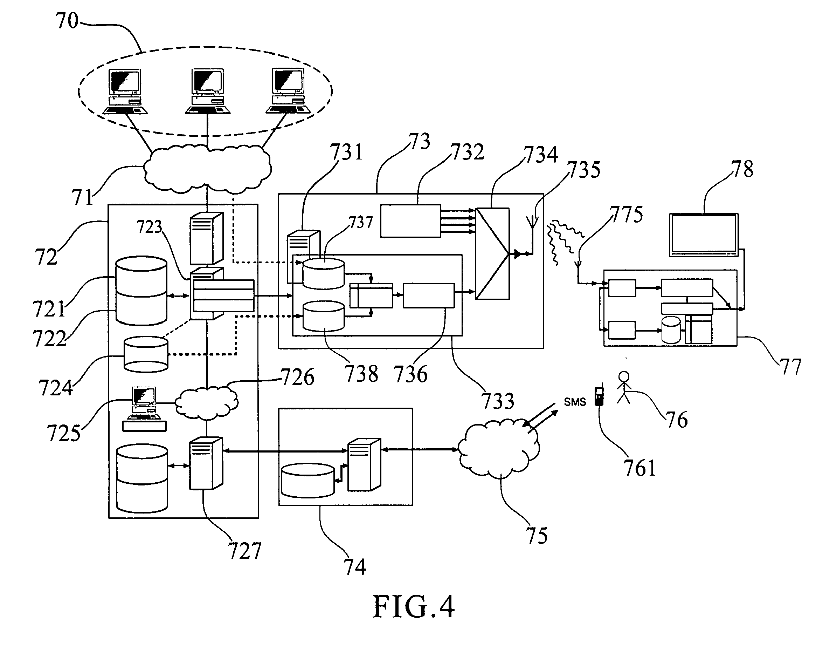

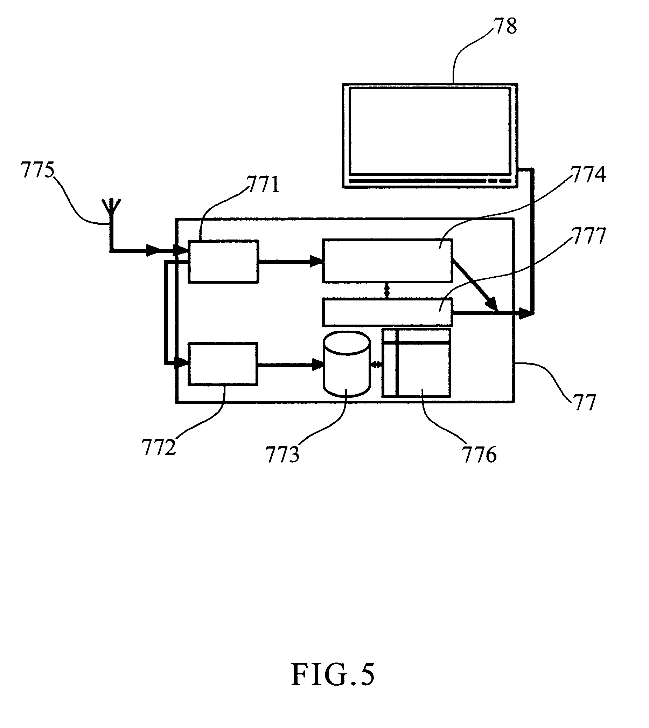

Figs. 4 and 5 show a system according to the present invention and a detail of a DTT receiver according to the present invention.

In a basic embodiment, the system according to the present invention comprises a broadcaster 72, a network operator or multiplex controller (MUX) 73 and at least one receiver 77.

The broadcaster may comprise a transactions server with the user 76, which receives information, for example, from an SMS platform 74 which receives information and instructions from the user 76 via a telephone network 75 from a mobile telephone terminal 761 of the user, by means of which the user 76 may respond to stimuli sent to his television set 78 via the system 72, 73, 77.

Typically, the broadcaster 72 also comprises a video ingestion server 725 in which the audiovisual contents 724 to be transmitted are compressed, for example, using MPEG2 or MPEG4-AVC (H263) coding procedures. Once the audiovisual contents have been ingested, the metadata (descriptive, transmission and service metadata) is generated by means of a server. The metadata may be created manually (for example, the program name) or by computational means (for example, the duration of the audiovisual content). The objective, in a known type of broadcaster, is to generate the contents to be transmitted by the network operator, by both the audiovisual content channel 721 and the data channel 722 for sending them to the broadcaster. For this phase, external orders may be received, for example, via scheduling servers 4, content managers 5 and advertising managers 6.

These servers may provide support to the system according to the present invention.

In the network operator 73, information and data relating to both the data channel 737 and the audiovisual channel 738 are received and stored on a specific server 731, and are combined by means of an encapsulator 736 according to the memory extraction carried out by programmed timer or scheduler. Once the information for a transmission according to the present invention has been encapsulated, together with other DTT services 732 (other channels), the transmission is multiplexed in a multiplexer 734 and sent via an aerial 735, so that it can be received by the aerials 775 of the receivers 77 and, being part of the signal shown, for example, on a television set 78.

According to the present invention, a receiver 77 should have an aerial 775 and at least two tuners 771, 772. The second tuner of the receiver according to the present invention is used to tune, extract, defragment and record on a hard disk 773 the audiovisual contents that have been included in the data channel, according to the instructions included therein, as well as the metadata 776 included therein. Accordingly the receiver has a signal analyser which searches the contents and recording orders according to pre-established recording standards and/or procedures. For the display thereof on a screen, interface applications may be necessary for each of the tuners 774, 777.

Although the invention has been described with regard to examples of preferred embodiments, these should not be considered as limiting the invention, which should be defined by the broadest interpretation of the following claims.

## Claims

1. Method for transmitting audiovisual contents in push environments, in which a transmitter transmits to a set of receivers a transmission signal which comprises at least a channel of audiovisual contents and a data channel associated therewith, **characterised in that** the transmitter transmits via the data channel at least one audiovisual content and a recording instruction for a transmission receiver of the audiovisual content introduced in the data channel.

2. Method according to claim 1, **characterised in that** the transmitter uses a portion of the bandwidth of the data channel for sending a frame for identifying data associated with audiovisual contents of the audiovisual transmission channel (metadata) and data corresponding to audiovisual contents transmitted by the data channel.

3. Method according to either claim 1 or claim 2, **characterised in that** the audiovisual content or contents transmitted by the data channel are fragmented in portions and the portions are listed for transmission and subsequent recording and defragmentation thereof by the receiver.

4. Method according to claim 3, **characterised in that** the transmitter uses a portion of the bandwidth corresponding to the data channel for sending a frame identifying the fragments.

5. Method according to any one of claims 1 to 4, **characterised in that** the transmission is a digital terrestrial television transmission.

6. System for the transmission of audiovisual contents in push environments, which comprises at least a broadcaster which provides audiovisual contents for transmission and metadata to a network operator which transmits them by means of a transmission signal comprising at least an audiovisual contents channel and a data channel containing the metadata, and at least a receiver which receives the transmission signal, comprising at least a tuner and a hard disk for recording audiovisual contents, **characterised in that** the network operator transmits via the data channel at least one audiovisual content together with a recording instruction for the receiver introduced in the data channel, and **in that** the receiver comprises at least a second tuner and an analyser of the signal received for interpreting the instruction or instructions contained in the data channel.

7. System according to claim 6, **characterised in that** the network operator uses a portion of the bandwidth of the data channel for sending a frame for identifying data associated with audiovisual contents of the audiovisual transmission channel (metadata) and data corresponding to audiovisual contents transmitted by the data channel.

8. System according to either claim 6 or claim 7, **characterised in that** the audiovisual content or contents transmitted by the data channel are fragmented in portions and the portions are listed for transmission and subsequent recording and defragmentation thereof by the receiver.

9. System according to claim 8, **characterised in that** the network operator uses a portion of the bandwidth corresponding to the data channel for sending a frame for identifying the fragments.

10. System according to any one of claims 6 to 9, **characterised in that** the transmission is a digital terrestrial television transmission.
